# EUROPEAN PATENT APPLICATION

(11) **EP 2 180 747 A1**
(43) Date of publication of application: **28.04.2010**
(21) Application number: 09173679.3
(22) Date of filing: 21.10.2009
(51) Int. Cl.: H04W 72/04

(54) **Method for managing the roles of the nodes of a wireless communication network**

(30) Priority: 22.10.2008 IT TO20080777
(71) Applicant: SELEX COMMUNICATIONS S.p.A., 16151 Genova (IT)
(72) Inventor: Armani, Claudio, 16129, GENOVA (IT); Legato, Natalino, 56121, PISA (IT); Loreti, Pierpaolo, 00178, ROMA (IT); Porzio Giusto, Pietro, 00189, ROMA (IT)
(74) Representative: Jorio, Paolo

(57) **Abstract**

A method for managing roles in a wireless-communication network (1) having a plurality of nodes (2), which includes the step of assigning selectively to the nodes roles of root node (N1), internal node (N2-N5), or leaf node (N6-N12), each leaf node being affiliated to an internal node or to a root node, each internal node being affiliated to another internal node or to the root node, and moreover includes the step of associating to the root node and to each internal node a respective time slot within a communication frame, the method moreover including the step of modifying dynamically the role of the nodes, said modification step including selecting a node from among the plurality of nodes, verifying the role of the selected node and executing a procedure of role change chosen from among a plurality of procedures on the basis of the role of the selected node.

## Description

The present invention relates to a method for managing the roles of the nodes of a mobile wireless-communication network. In particular, the present invention regards a method for managing the roles within a network, the nodes of which make use of functional roles typical of a hierarchical network of the point-to-multipoint type in a time-division context with dynamic assignment of the roles of the nodes.

As is known, traditionally radio technologies structured for being used in hierarchical networks of a point-to-multipoint type, typically employed in mobile-radio systems for the management of public cellular networks, differ from the radio technologies designed for use in peer-to-peer networks of a meshed type, typically used in even important market niches, such as the sensor sector or the sector of networks for professional use.

However, described in the Italian patent application No. T02007A000441, filed on June 20, 2007 is a telecommunications system comprising a peer-to-peer network, the nodes of which, compatible with the IEEE 802.16e-2005 standard (also known as Worldwide Interoperability for Microwave Access, WIMAX), assume functional roles typical of a hierarchical network of the point-to-multipoint type, in a time-division context, in such a way that the network itself may be deemed equivalent to a peer-to-peer network of the multipoint-to-multipoint type.

In detail, the communication time frame of the network is divided into a plurality of time intervals or blocks, not necessarily of equal duration, applied within each of which is a hierarchical point-to-multipoint communication scheme. The nodes (in particular, the nodes that have an internal or root role, as described hereinafter) assume on a rotational basis a function of "master" of the hierarchical communication during the time intervals within which they are assigned said function.

Figure 1 shows, by way of example, a network 1 of the type described in the Italian patent application No. T02007A000441, which has a tree structure. In detail, the network 1 is formed by a plurality of nodes 2, in particular by twelve nodes identified by N1-N12, each of which comprises a radio base station BS, responsible for performing functions of the same type as those executed by a base station of a point-to-multipoint system, and a user station or mobile station MS, responsible for performing functions of the same type as those executed by a terminal station of a mobile-radio system. In particular, each radio base station BS and each mobile station MS comprise a respective stack of control layers, each stack of control layers comprising in turn a layer for managing data-connection functions (MAC layer) and a layer for managing physical connections (physical layer).

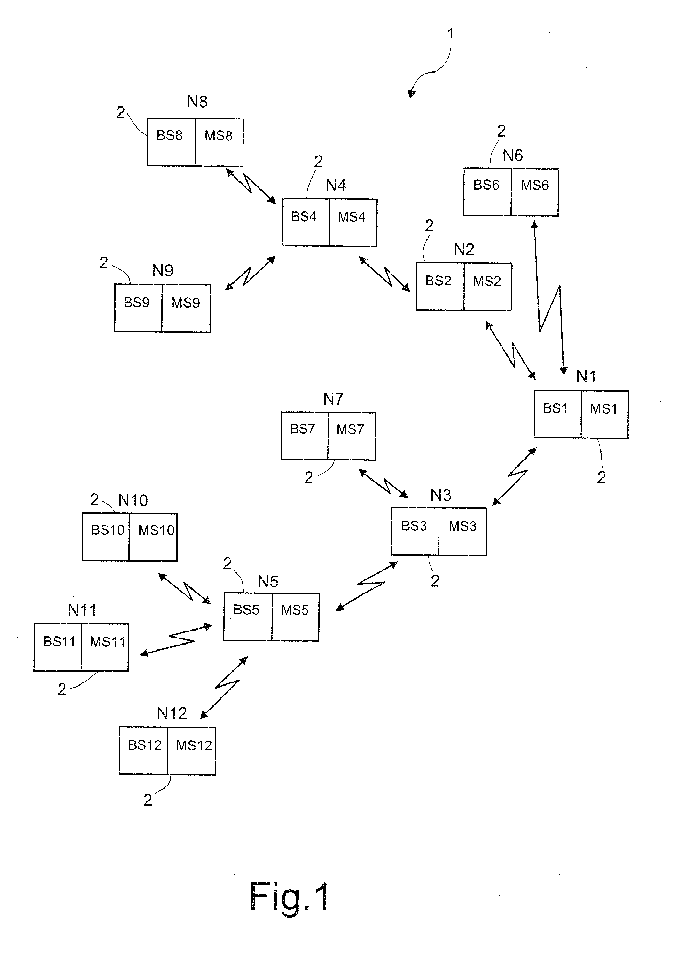

Each node N1-N12 has a different topological role, hereinafter defined also simply as "role". In particular, a node (in the example of Figure 1, the node N1) having network-management functions and typically not affiliated to any other node is defined as "root node". Nodes that can be either affiliated or affiliating (the nodes N2, N3, N4, N5) are defined as "internal nodes" or "backbone nodes", whilst nodes that do not have (nor can have) affiliated nodes (the nodes N6, N7, N8, N9, N10, N11, N12) are defined as "leaf nodes".

According to the topological role of each node N1-N12 of the network 1 (root, internal, or leaf), the corresponding radio base stations BS and mobile stations MS can be both active, as in the case of internal nodes, or else just the radio base station BS can be active, as in the case of the root node. Finally, in the case of leaf nodes, just the mobile station MS is active. In the case of an internal node, the mobile station MS can become active only when the associated radio base station BS is not involved in the communication. In the case of a leaf node, the radio base station BS can become active when special procedures are activated, such as for example the management operations referred to hereinafter.

The nodes 2 communicate using time slots within a single frame throughout the network, said frame being established by the root node (in the example of Figure 1, the node N1). The frames repeat periodically, and each frame can comprise up to eight slots. One or more slots are assigned in a scheduled way with cadenced frame to the root node and to each internal node, in such a way that there can be slots not assigned, but it is not possible for each slot to be assigned to more than one node. Furthermore, each root or internal node activates its own radio base station BS within the slots assigned thereto; consequently, during each slot, the radio base station BS of just one node can be active. Again, one or more of the slots in which the frame is divided are dedicated to operations of network management; said slot, generally referred to as management slot, can be assigned for example to leaf nodes, which, during said management slot, issue signals useful for their identification by other nodes of the network.

According to what is indicated in the aforesaid Italian patent application No. T02007A000441, bi-directional communications are allowed between the radio base station BS and the mobile station MS of different nodes, but communications between radio base stations BS or between mobile stations MS are not allowed. In detail, each internal node can be affiliated, by means of its own mobile station MS, to the radio base station BS of another internal node. In addition, each internal node can set up, by means of its own radio base station BS, connections of a point-to-multipoint type with leaf nodes, in particular with the mobile stations MS of said leaf nodes. It follows that each mobile station MS synchronizes and communicates with just one radio base station BS (point-to-point connection), whilst each radio base station BS can communicate with a number of mobile stations MS, which connect up according to multiple-access techniques to the radio base station BS during the slot assigned to the radio base station BS.

Within each slot, the communications occur according to techniques known in the field of electrical communications, and in particular according to what is envisaged by the IEEE 802.16e-2005 standard, which envisages the use of time-division multiplexing techniques (Time Division Duplex, TDD). In detail, the TDD technique envisages that, given a communication frame, each slot is divided into a downlink subframe and an uplink subframe, of variable dimensions. Each radio base station BS sets up a connection of transmission during the downlink subframe and a connection of reception during the uplink subframe, whilst each mobile station MS sets up a connection of reception during the downlink subframe and a connection of transmission during the uplink subframe.

Given the topological roles assumed, the root node sets up, by means of its own radio base station BS, connections of transmission during the downlink subframe and connections of reception during the uplink subframe with the mobile stations MS of the nodes (internal or leaf) affiliated thereto. Each internal node sets up, by means of its own mobile station MS, a connection of reception during the downlink subframe and a connection of transmission during the uplink subframe with another node; it moreover sets up, by means of its own radio base station BS, connections of transmission during the downlink subframe and connections of reception during the uplink subframe with the mobile stations MS of the nodes (internal or leaf) affiliated thereto. Finally, each leaf node sets up, by means of its own mobile station MS, a connection of reception during the downlink subframe and a connection of transmission during the uplink subframe with the radio base station BS of the internal node to which it is affiliated.

By way of example, in the scheme of Figure 1, the mobile station MS1 of the root node N1, which here is not affiliated to other nodes, is used only for measurements, whereas the radio base station BS1 is connected to the mobile stations MS2, MS3 and MS6 of the internal nodes N2, N3, as well as of the leaf node N6. The radio base stations BS2 and BS3 of the internal nodes N2, N3 are connected, respectively, to the mobile station MS4 of the internal node N4, and to the mobile stations MS7 and MS5 of the leaf node N7 and of the internal node N5. The radio base stations BS4 and BS5 of the internal nodes N4 and N5 are then connected, respectively, to the mobile stations MS8, MS9 of the leaf nodes N8, N9 and to the mobile stations MS10, MS11 and MS12 of the leaf nodes N10, N11 and N12. The radio base stations BS6-BS12 of the leaf nodes N6-N12 are not connected to other mobile stations MS and are used only in extraordinary-management procedures.

Management of the network illustrated in Figure 1 is entrusted to the root node N1, which has a structure similar to that of the internal nodes but housing a central member, called "topology root", which carries out functions of network management. In detail, among the functions performed by the root node there are, in addition to the definition of the frame: construction and management of the structure ("backbone") of the network itself, by establishing and managing the role assumed by each node in the communication time frame used in the network; management of entry and exit of nodes into and from the node network; search for new nodes/networks close to the nodes of the network considered; management of faults and losses of connectivity; maintenance of the temporal synchronism between the nodes of the network; creation of a matrix of visibility of the nodes and distribution of said visibility matrix to all the nodes of the network.

Networks of the type described find wide use in scenarios rapidly evolving in time, in which the nodes are typically mobile in space, with consequent continuous variations of the relative positions of the nodes themselves. Furthermore, the traffic generated by the nodes, understood as type and amount of data exchanged by a node with other nodes per unit time, can vary in time. Again, some nodes can move away from the other nodes, exiting from the network, or else new nodes can add to the present nodes, with consequent broadening of the network itself.

Following upon change of the conditions of the network (traffic, addition/subtraction of nodes, modifications of the importance of the nodes, etc.), it is desirable to have the possibility of modifying the topological roles of one or more nodes, and possibly also of changing the root node so as to optimize the overall performance of the network, and in particular allocation of the slots to the nodes of the network, geographical coverage of the network, amount of data exchanged as a whole in the network per unit time (throughput), transmission delays, etc.

The aim of the present invention is to provide a method for managing the roles of the network nodes that will enable changes of roles of the network nodes.

According to the present invention a method for managing the roles of the nodes of a wireless network, a node for a wireless-communication network, a wireless-communication network, and a computer program product, are provided as defined, in claim 1, claim 14, claim 16, and claim 17, respectively.

For a better understanding of the invention, an embodiment thereof is now described, purely by way of non-limiting example, with reference to the attached drawings, wherein:
- Figure 1 shows an example of network with meshed topology to which the invention applies;
- Figure 2 shows a flowchart regarding the procedure of change of role from internal node to leaf node;
- Figure 3 shows a flowchart regarding the procedure of change of role from leaf node to internal node; and
- Figure 4 shows a flowchart regarding the procedure of change of the root node.

The ensuing description refers to the network 1 illustrated in Figure 1, which, as has been mentioned previously, complies with the teachings of the Italian patent application No. T02007A000441 and has a tree structure, given that it has a root node (in the case in point the node N1) which is located at the vertex of the tree and does not affiliate with other nodes. However, the present management method can be used also in networks that have a meshed structure. Furthermore, the present management method is irrespective of the type of communication technique used within each slot; for example, instead of the TDD technique, the communications within each slot can occur on the basis of the frequency-division multiplexing technique (Frequency Division Duplex, FDD), or else again with hybrid techniques, which make use both of TDD multiplexing and of FDD multiplexing. The definitions of downlink subframe and uplink subframe depend, in a way in itself known, upon the techniques of communication employed.

In particular, when the root node (N1 in Figure 1) shows the need or expediency of redefining the structure of the network 1 or of some nodes 2 of the network 1 itself, it verifies the topological role of the nodes concerned and manages the operations necessary for modification of the roles in order to enable the network 1 to adapt to the external conditions and/or optimize its own operation. Given that each node possesses all the resources for operating in the different roles, but operates in a different way and its components are activated and/or de-activated differently according to the role assumed in the network, the role change occurs in different ways.

From a practical standpoint, the modification of a topological role of a node is of considerable complexity. For example, in the case of role change of a node from internal to leaf, it is necessary to minimize, and possibly reduce to zero, the number of the nodes affiliated thereto, which, following upon said role change, lose connectivity with the network. In the case of change of role from leaf node to internal node, given that the maximum number of internal nodes that can be present in a network is generally limited, said change must occur so as to respect said limit. Likewise, the change of the root node must occur with the minimum number of losses of connectivity within the network, possibly without any loss.

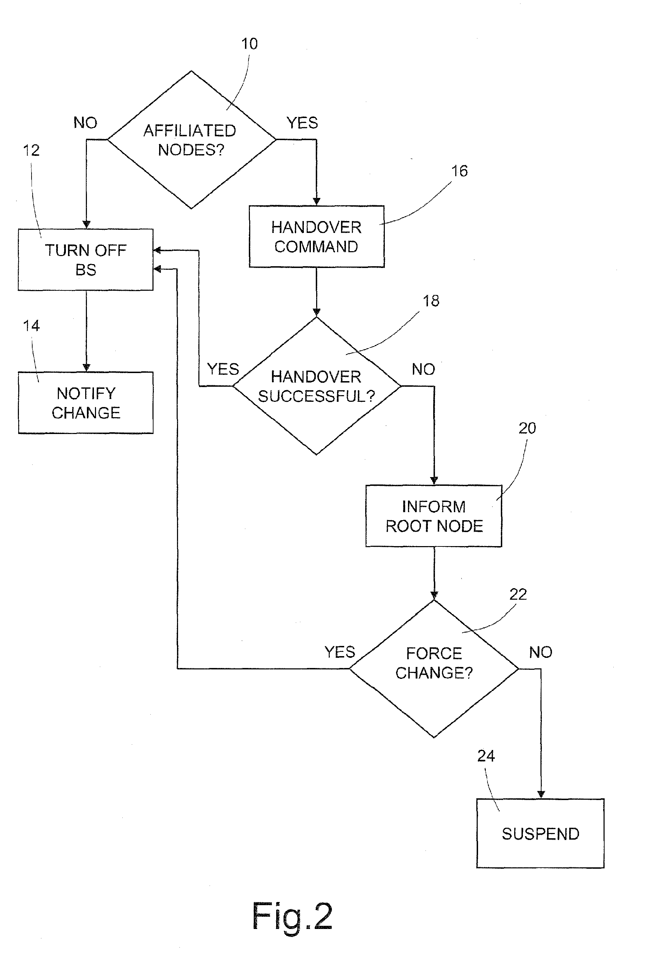

When it is becomes expedient to change the role of a node (hereinafter, for simplicity, identified as "node Nx") from internal node to leaf node, the procedure schematically illustrated in Figure 2 is implemented, where it is assumed that the internal node Nx in question is affiliated to another internal node or to the root node.

Given the possibility for the internal node Nx to have affiliated nodes, the root node verifies the presence of nodes affiliated to the node Nx (block 10). In the event of absence of affiliated nodes (for example, when the nodes affiliated to the node Nx have just been disconnected because they have exited from the network or because there has been a previous change of the network topology) (output NO from block 10), the node Nx turns off its own radio base station BS (block 12) and notifies the root node of the change having occurred (block 14). Instead, if the node Nx has affiliated nodes (output YES from block 10), it issues a command to them for migration of the communication and affiliation ("handover procedure") to other nodes of the network (block 16) and subsequently verifies the success of said migrations (block 18). In the case where all the affiliated nodes have managed to execute the handover towards other nodes (output YES from block 18), the node Nx turns off its own station BS (block 12) and notifies the root node of the change having occurred (block 14). Instead, in the case where not all of the affiliated nodes have managed to execute the handover towards other nodes (output NO from block 18), the node Nx informs the root node of the impossibility of executing handover by its own affiliated nodes (block 20).

Next, the root node decides (block 22) whether the node Nx must in any case execute role change. In the case where the root node decides to force even so change of role of the node Nx (output YES from block 22), the node Nx carries out the corresponding operations, passing on to block 12, with consequent loss of connectivity by the affiliated nodes that have not managed to execute the handover. Alternatively (output NO from block 22), the node Nx suspends the role change (block 24).

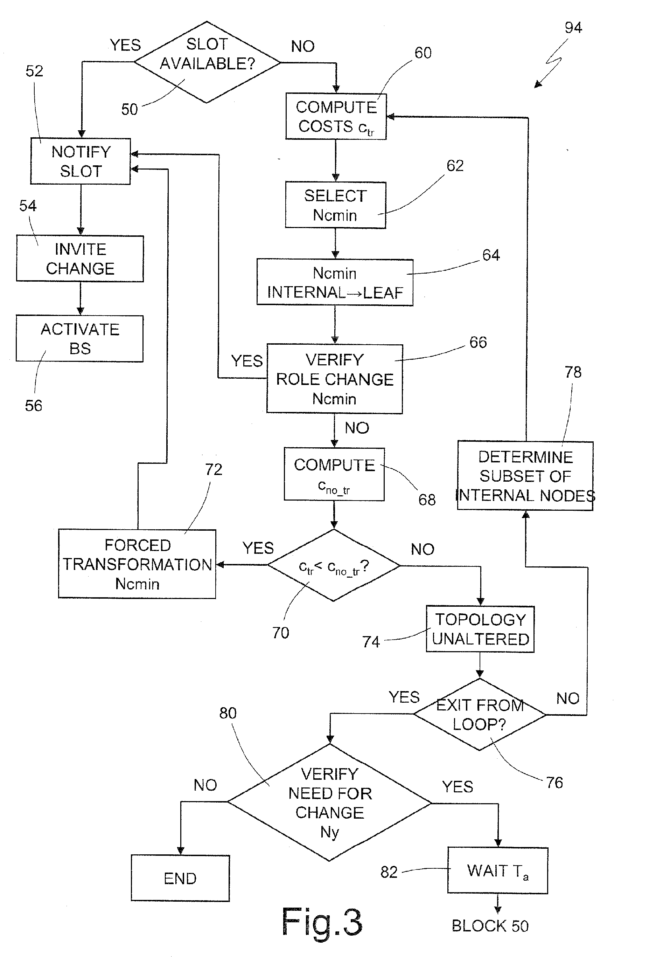

When it is desired to change the role of a node (hereinafter called for simplicity "node Ny") from leaf node to internal node, the procedure 94 schematically illustrated in Figure 3 is implemented.

In detail, the root node initially verifies the availability of a slot of the frame for the node Ny (block 50), i.e., of a slot not assigned to any internal node, or to the root node, or to management operations.

In the case of availability of a slot (output YES from block 50), the root node informs the node Ny as regards said slot (block 52) and invites it to execute the role change (block 54).

Next, the node Ny activates its own radio base station BS (block 56) and starts to operate as internal node, and hence becomes available for affiliating other nodes, for example, nodes that have approached the network and must be affiliated.

In the case of unavailability of a slot (output NO from block 50), the root node looks for an internal node Ncmin that can be transformed into leaf node with a minimum transformation cost cₜᵣ, said node being hereinafter defined as minimum-cost internal node Ncmin.

For identifying the minimum-cost internal node Ncmin, the root node calculates for all the internal nodes of the network the corresponding transformation cost cₜᵣ (block 60) and, subsequently, selects the internal node having the lowest transformation cost cₜᵣ (block 62).

Given an internal node, the aforementioned transformation cost cₜᵣ is calculated as weighted sum of partial costs of one and the same internal node, which are in turn calculated according to respective pre-set calculation criteria by a network manager. Purely by way of example, said criteria of calculation comprise:
- strategic importance of the node within the network;
- number, and possibly also role, of the nodes affiliated to the node;
- mission assigned to the node and/or direction/speed of the node; for example low (even negative) partial costs are assigned to nodes that are destined to leave the network, and hence are unsuitable for having the role of internal nodes;
- quality of the transmissions of the node, in particular presence of electromagnetic disturbance and/or likelihood of undergoing tapping; for example, low partial costs are assigned to nodes affected by high electromagnetic disturbance or risk of tapping, hence less suitable for operating as internal nodes.

The weighted sum (at the discretion of the network manager) of the partial costs of a node determines the transformation cost cₜᵣ of said node.

Next, the root node issues a command to the minimum-cost internal node Ncmin for changing its own role into leaf node (block 64), said change occurring according to the steps described previously and schematically illustrated in Figure 2.

The root node verifies the success of the role change of the minimum-cost internal node Ncmin (block 66).

In the case where the role change is successful (output YES from block 66), for example because the minimum-cost internal node Ncmin is without affiliated nodes, or else because the nodes affiliated thereto manage to execute handover to other nodes, the slot previously assigned to the minimum-cost internal node Ncmin is assigned to the node Ny, and control returns to block 52.

In the case where the role change of the minimum-cost internal node Ncmin fails, for example because it presents affiliated nodes that do not manage to execute handover to other nodes (output NO from block 66), the root node determines a cost c_{no_tr} associated to the unsuccessful transformation of the node Ny into internal node (block 68).

The criteria for determining said cost c_{no_tr} associated to unsuccessful transformation can be pre-set by the network manager and are similar to the ones described previously regarding the transformation cost cₜᵣ (weighted sum of partial costs), with the following consideration:
- the partial cost of the number of affiliated nodes is clearly zero, and is replaced by a partial cost indicating the number of nodes that the node Ny can potentially affiliate, i.e., of the nodes that are in conditions as to be able to set up communication with the node Ny.

Next, the root node compares said cost c_{no_tr} associated to the unsuccessful transformation of the node Ny into internal node with the transformation cost cₜᵣ determined for the minimum-cost internal node Ncmin (block 70).

In the case where the transformation cost cₜᵣ of the minimum-cost internal node Ncmin is lower than the cost c_{no_tr} associated to the unsuccessful transformation of the node Ny (output YES from block 70), the root node issues a command for forced transformation of the minimum-cost internal node Ncmin (block 72), and returns to block 52.

In the case where the transformation cost cₜᵣ of the minimum-cost internal node Ncmin is higher than the cost c_{no_tr} associated to the unsuccessful transformation of the node Ny (output NO from block 70), the root node leaves the topology unaltered (block 74). Next, the root node verifies (block 76) whether a time interval To has elapsed from the start of the procedure of change of role of the node Ny, and in particular from the verification of the availability of a slot (block 50). Said time interval To can be pre-set by the network operator, for example as a function of the total number of nodes, of the speed of displacement of the nodes, etc., and represents, as described in detail hereinafter, the maximum time in which it is possible to carry out the search for an internal node to be changed into leaf node so as to release the corresponding slot for assigning it to the node Ny.

In the case where the time interval To has not yet elapsed (output NO from block 76), the root node determines (block 78) a subset of the internal nodes, which comprises internal nodes of the network that are selected according to a rule of selection described in detail hereinafter.

On said subset the operations carried out in blocks 60-76 are then iterated. In said iteration, in block 68 the cost c_{no_tr} associated to the unsuccessful transformation of the node Ny into internal node is recalculated, given that said cost can differ from the cost c_{no_tr} calculated previously, for example because changes of the network topology have occurred.

Operatively, at each iteration, the rule of selection provided in block 78 envisages determining the subset of internal nodes starting from a set comprising all the internal nodes, excluding at each iteration the minimum-cost internal nodes Ncmin selected previously so as to restrict the search for further minimum-cost internal nodes Ncmin just to the internal nodes that have not yet been selected. In the case where, before the time interval To has elapsed, all the internal nodes of the network have been selected at least once, the selection rule envisages that the subset of internal nodes in which to seek the minimum-cost internal node Ncmin is formed by the N internal nodes selected less recently, with N chosen at the discretion of the network manager. Obviously, N must be nonzero and lower than the total number of internal nodes of the network. For example, with N equal to 1, the internal nodes are selected in the same order in which they had been selected previously; otherwise, with N equal to the total number of internal nodes minus one, excluded from the subset of internal nodes is, at each iteration, only the minimum-cost internal node Ncmin selected at the previous iteration. In the particular case of network comprising just one internal node, the subset of internal nodes comprises, at each iteration, said internal node.

In the case where the time interval To has elapsed (output YES from block 76), there occurs exit from the cycle defined by blocks 60-70, 74-78, without it having been possible to select an internal node that is able to change its own role into leaf node, i.e., without it having been possible to identify an internal node with cost of transformation from internal node to leaf node lower than the cost c_{no_tr} associated to the unsuccessful transformation of the internal node Ny (block 68).

In this case, the root node verifies (block 80) whether there persist conditions such that it is still necessary to execute the change of role of the node Ny. In the case where said conditions have changed, so that the change of role of the node Ny is no longer necessary (output NO from block 80), the procedure terminates; otherwise, if said conditions persist, the root node waits for a further wait interval Tₐ (block 82), and subsequently resumes the procedure described, starting from the verification of the presence of an available slot (block 50).

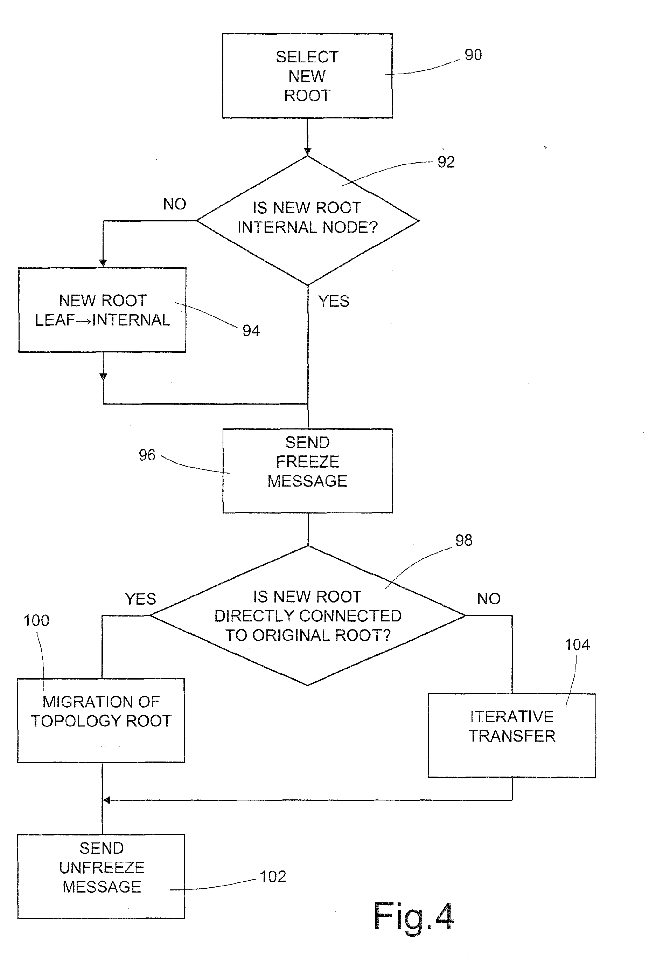

When it becomes expedient to change the root node, i.e., transfer the topology root to another node, the procedure schematically illustrated in Figure 4 is carried out. By way of example, the change of the root node can be expedient when the root node is about to disconnect from the network, for example because it is close to de-activation, or else when a node to which it is desired to assign the role of root node enters the network.

In what follows, for reasons of clarity, the root node that transfers the topology root is referred to as "original root", whereas the node that is to receive the topology root is referred to as "new root".

As illustrated in Figure 4, the original root selects the new root (block 90), then verifies (block 92) the topological role of the new root selected. In the case where the new root is a leaf node (output NO from block 92), before continuing with the procedure, the original root forces said new root to change its own role from leaf node to internal node (block 94). In the case where the new root is already an internal node (output YES from block 92), or else after change of role of the new root (block 94), the original root broadcasts to all the nodes of the network a freeze message, through which it forbids the nodes themselves to execute handovers until the next communication (block 96).

Next, the original root verifies whether the new root is directly connected thereto (block 98).

In the case of direct connection (output YES from block 98), the topology root migrates directly from the original root to the new root (block 100) and subsequently broadcasts (block 102) to all the nodes of the network an unfreeze message, through which it informs that migration has occurred and that it is again possible to carry out handovers.

Otherwise, i.e., in the case where the new root is connected indirectly with the original root (output NO from block 98), i.e., in the case where the new root and the original root have connected up by means of a chain of intermediate internal nodes, the topology root is transferred iteratively (block 104). In detail, the topology root is transferred from the original root to the first internal node of the chain, then from the first internal node of the chain to the next internal node of the chain, and so forth, until the new root is reached. During said iterative transfer, when the internal nodes of the chain house the topology root, they assume the role of temporary root. In the case where the iterative transfer until the new root is reached occurs without any interruption, just one freeze message is sent before the start of the iterative transfer, and just one unfreeze message is sent at the end. In the case where the procedure undergoes interruptions (case not illustrated in Figure 4), the temporary root that houses the topology root at the moment of the interruption becomes the new root of the network and broadcasts to all nodes of the network an unfreeze message for enabling again the possibility of carrying out handovers. Otherwise, the unfreeze message is sent when the topology root reaches the new root (block 102), at the end of the iterative transfer.

The transfer of the root role to an internal node or a node transformed into internal node for the purpose (block 94), entails transfer of functions typical of the root node (for example, generation of network synchronisms), but does not require transfer either of software or of data, since the nodes of the network all have the same software and the internal nodes have available the same data available to the root node.

The advantages that the present method for managing the roles of the nodes of a network affords emerge clearly from the foregoing discussion. In particular, the present management method enables modification of the roles of the nodes of a network, the nodes of which: i) are each provided with a first radio interface (the radio base station BS), responsible for performing functions of the same type as the ones carried out by a base station of a point-to-multipoint system, and a second radio interface (the mobile station MS), responsible for performing functions of the same type as the ones carried out by a terminal station of a mobile-radio system; ii) communicate using slots uniquely associated to the nodes themselves, within which the nodes can communicate in compliance with what is envisaged by the IEEE 802.16e(2005) standard, or else with other communication techniques of a known type.

Finally, it is evident that modifications and variations may be made to the present method for managing the roles of the nodes of a network, without thereby departing from the scope of the present invention, defined by the annexed claims.

For example, during the procedure of role change of a node Ny from leaf node to internal node, upon each iteration of the operations of calculation of the transformation costs cₜᵣ of the nodes of the subset of internal nodes, the root node can store the costs cₜᵣ calculated at the previous iteration, determining the new costs cₜᵣ on the basis of said costs and of the topological changes that have been made between the current iteration and the previous iteration.

## Claims

1. A method for managing roles in a wireless-communication network (1) including a plurality of nodes (2), comprising the step of assigning selectively to said nodes roles of root node (N1), internal node (N2-N5), or leaf node (N6-N12), each leaf node being affiliated to an internal node or to a root node, each internal node being affiliated to another internal node or to the root node, and moreover comprising the step of associating to the root node and to each internal node a respective time slot within a communication frame, said method being **characterized in that** it moreover comprises the step of modifying dynamically the role of said nodes, which includes selecting a node from among said plurality of nodes, verifying the role of said selected node and executing a procedure of role change chosen from among a plurality of procedures on the basis of said role of said selected node.

2. The method according to claim 1, wherein said plurality of procedures comprises a procedure of change of role from internal node to leaf node, which includes the steps of:
- verifying (10) the presence of nodes affiliated to a selected node (Nx);
- in the case of absence of affiliated nodes, changing (12) the role of said selected node (Nx) from internal node to leaf node;
- otherwise, affiliating (16) said nodes affiliated to other nodes of the network; and
- subsequently, changing (12) the role of said selected node (Nx) from internal node to leaf node.

3. The method according to claim 1 or claim 2, wherein said plurality of procedures moreover comprises a procedure of change of the role from leaf node to internal node, which includes the steps of:
a) verifying (50) the presence of a free time slot not associated to any internal node or root node;
b) in the case of presence of said free time slot, changing (52-56) the role of said selected node (Ny) from leaf node into internal node, associating to said selected node (Ny) said time slot;
c) in the case of absence of said free time slot, calculating (60) a cost of transformation (cₜᵣ) into leaf node for each of said internal nodes of said network and selecting (62) a minimum-cost internal node (Ncmin) having a minimum transformation cost (cₜᵣ);
d) issuing a command (64) for a role change of said minimum-cost internal node (Ncmin) from internal node to leaf node;
e) verifying (66) that a change of role from internal node to leaf node has taken place;
f) in the case of negative outcome of said step e) of verifying, calculating (68) a cost (c_{no_tr}) associated to the unsuccessful role change of said selected node (Ny) and comparing (70) said cost (c_{no_tr}) associated to the unsuccessful role change with said transformation cost (cₜᵣ) of said minimum-cost internal node (Ncmin);
g) if said transformation cost (cₜᵣ) of said minimum-cost internal node (Ncmin) is lower than said cost (c_{no_tr}) associated to the unsuccessful role change of said selected node (Ny), forcing (72) said change of role of said minimum-cost internal node (Ncmin) into leaf node and freeing the time slot associated to said minimum-cost internal node (Ncmin);
h) otherwise, leaving (74) the roles of the nodes of the network unaltered.

4. The method according to claim 3, wherein said procedure of change of the role from leaf node to internal node moreover comprises the steps of:
i) if said transformation cost (cₜᵣ) of said minimum-cost internal node (Ncmin) is higher than said cost (c_{no_tr}) associated to the unsuccessful role change of said selected node (Ny), selecting (78) a subset of internal nodes of the network;
j) on said subset of internal nodes, iterating steps c) to h).

5. The method according to claim 4, wherein said step of selecting (78) a subset of internal nodes of the network comprises selecting internal nodes not selected in previous iterations.

6. The method according to any one of claims 3 to 5, comprising, in the case of positive outcome of said step e), changing (52-56) the role of said selected node (Ny) from leaf node to internal node, associating to said selected node (Ny) the time slot previously associated to said minimum-cost internal node (Ncmin).

7. The method according to any one of claims 4 to 6, comprising, prior to said step j) of iterating, the steps of:
- calculating a time for search of a minimum-cost node;
- comparing (76) said time for search of a minimum-cost node with a maximum search time (T₀);
- in the case where said time for search of a minimum-cost node is shorter than said maximum search time (T₀), executing said step j) of iterating.

8. The method according to claim 7, moreover comprising the steps of:
- in the case where said time for search of a minimum-cost node is longer than said maximum search time (T₀), verifying (80) whether there persist conditions of expedience of role change of said selected node (Ny);
- if so, waiting (82) for a wait time interval (Tₐ) and returning to said step a) for verification of the presence of a free time slot.

9. The method according to any one of claims 3 to 8, wherein said step of calculating (60) a transformation cost (cₜᵣ) comprises, for each internal node considered, calculating a weighted sum of one or more of the following partial costs:
- a partial cost indicating strategic importance of said internal node considered within the network;
- a partial cost indicating the number and the role of the nodes affiliated to said internal node considered;
- a partial cost indicating a mission assigned to said internal node considered;
- a partial cost indicating direction/speed of said internal node considered;
- a partial cost indicating the presence of electromagnetic disturbance and/or the likelihood of undergoing tapping by said internal node considered.

10. The method according to any one of claims 3 to 9, wherein said step of calculating (68) a cost (c_{no_tr}) associated to unsuccessful role change of said selected node (Ny) comprises calculating a weighted sum of one or more of the following partial costs:
- a partial cost indicating strategic importance of said selected node (Ny) within the network;
- a partial cost indicating the number and the role of the nodes of the network that can be potentially affiliated to said selected node (Ny);
- a partial cost indicating a mission assigned to said selected node;
- a partial cost indicating direction/speed of said selected node;
- a partial cost indicating the presence of electromagnetic disturbance and/or of the likelihood of undergoing tapping by said selected node.

11. The method according to any one of claims 2-10, wherein said plurality of procedures comprises a procedure of change of the root node for enabling a migration of a topology root from an original root to a new root and including the steps of:
- verifying (92) a role previously associated to said new root;
- if said new root is a leaf node, executing said procedure (94) of change of role from leaf node to internal node;
- sending (96) a message of role-change freezing to the nodes of the network;
- if said new root and said original root are directly connected, bringing about migration (100) of said topology root from said original root to said new root; otherwise, bringing about migration (104) of said topology root from said original root to said new root along a chain of intermediate internal nodes, each of said intermediate internal nodes acting as temporary root; and
- sending (102) to the nodes of the network an unfreeze message so as to enable again changes of role by said nodes.

12. The method according to claim 11, wherein said procedure of change of the root node moreover comprises the step of:
- in the case where an interruption of said procedure of change of the root node occurs during the step of migration of said topology root, said interruption occurring whilst said topology root is hosted by an intermediate internal node, assigning to said intermediate internal node the role of new root.

13. The method according to any one of claims 1 to 12, wherein: the role of root node entails execution of a management of a transmission connection in downlink and a reception connection in uplink with at least one first node; the role of internal node entails execution of a management of a reception connection in downlink and a transmission connection in uplink with a second node and management of a transmission connection in downlink and a reception connection in uplink with at least one third node different from the second node; and the role of leaf node entails execution of a management of a reception connection in downlink and a transmission connection in uplink.

14. A node for a wireless-communication network, configured for implementing the method for managing the roles according to any one of the preceding claims.

15. The node for a communication network according to claim 14 when depending upon claim 13, moreover comprising a radio base station (BS) configured so as to execute said management of transmission connection in downlink and reception connection in uplink, and a mobile station (MS) configured so as to execute said management of reception connection in downlink and transmission connection in uplink.

16. A wireless-communication network comprising a plurality of nodes (2) according to claim 14 or claim 15.

17. A computer program product that can be loaded into a memory of a node of a wireless-communication network and configured for implementing, when executed, the method for managing the roles of the nodes (2) of a network (1) according to any one of claims 1 to 13.
